# EUROPEAN PATENT SPECIFICATION

(11) **EP 1 034 190 B1**
(45) Date of publication and mention of the grant of the patent: **27.08.2003**
(21) Application number: 98959229.0
(22) Date of filing: 24.11.1998
(51) Int. Cl.: C08F 4/642, C07F 17/00, C08F 10/00

(54) **POLYMERIZATION CATALYST FOR OLEFIN MONOMERS**
POLYMERISATIONSKATALYSATOR FÜR OLEFINMONOMERE
CATALYSEUR DE POLYMERISATION POUR MONOMERES D'OLEFINES

(30) Priority: 24.11.1997 KR 6246197
(43) Date of publication of application: 13.09.2000
(73) Proprietor: LG CHEMICAL LIMITED, Seoul 150-010 (KR)
(72) Inventor: OH, Jae-Seung, Daejeon-city 305-340 (KR); PARK, Jae-Hyeon, Daejeon-city 305-340 (KR); PARK, Young-Whan, Daejeon-city 305-340 (KR)
(74) Representative: W.P. THOMPSON & CO.
(86) International application number: KR9800375
(87) International publication number: WO99026985

(56) References cited:
- EP-A1- 0 653 433
- EP-A1- 0 702 030
- EP-A1- 0 748 822
- EP-A2- 0 754 698
- US-A- 5 145 819
- US-A- 5 455 366
- US-A- 5 532 396
- US-A- 5 597 935
- US-A- 5 672 668

## Description

### a) Field of the invention

This invention relates to catalyst for the homo- or co-polymerization of ethylene, α-olefin and cycloolefin. More particularly, this invention relates to the structure of the transition metal compounds which can be used for the homo- or co-polymerization of ethylene, α -olefin and cycloolefin.

### b) Background of the invention

In the early 1980s, Prof. Kaminsky reported in DE 3127133 that the metallocene compound of group IV showed excellent activity in the olefin polymerization when it was activated with alkylaluminoxane. Since that, active research was done to develop the novel catalysts by varing the structure of the cyclopentadienyl ligands.

Metallocene compounds whose two cyclopentadienyl or hydroindenyl or fluorenyl ligands was connected by bridge (bridged metallocene compounds) was synthesized and tested for the polymerization to show characteristic reactivity which could not be seen with unbridged metallocene compounds.

For example, C2 symmetric bridged metallocene compounds containing two (hydro)indenyl lignads gave isotactic steroselectivity in the α-olefin polymerization (DE 3508887, EP-A-485821, EP-A-485823). However, the meso-compounds, which have the same composition but have different symmetry, Cs, was known to give a uniform comonomer composition in the polymer chains when it was used for the copoymerization of cycloolefin and ethylene or α -olefin (DE 4107682).

The metallocene compound which was derived from bridged ligand of cyclopentadienyl and fluorenyl showed the syndiotactic stereoselectivty in the α-olefin polymerization (EP-A-351392).

The bridge connect directly two five membered ring of the cyclopentadienyl or indenyl or hydroindenyl or fluorenyl ligands via methylene, ethylene, and dialkylsilylene diradical in the previously known bridged metallocene compounds. R. H. Halterman summarize it in Chemical Review, 92, 659 (1992).

### BRIEF DESCRIPTION OF THE INVENTION

This invention gives the novel structure of the bridged transition metal compounds in which the bridge connect the two ligands in different way.

The bridge connect indirectly the two cyclopentadienyl rings. That is, the cyclopentadienyl ligands whose two adjacent carbon were connected by triradicals to form annulated cyclopentadienyl ligand containing one radical in a newly formed ring are bridged by connecting each said remaining one radical to bridge. Novel bridged metallocene compounds can be synthesized by this bridged ligands.

In previous bridged metallocene compounds, steric hindrance was endowed by the annulated ring of the cyclopentadienyl ligands.

The metallocene compounds described in this invention endow the different steric hindrance from previously known bridged metallocene compounds, and especially the steric hindrance can be controlled by changing the length of bridge and bridging point.

In rac-ethylenebis(indenyl)zirconium dichloride, there is two conformational fluxional motion, δ -form and λ -form (Organometallics, 14, 1256 (1995)). This motion was known to decrease the stereoselcetivity in the α -olefin polymerization at high temperature (Metaliocenes '95 proceedings 403f and references cited therein). A bridged metallocene depicted in this invention, for example, rac-metallocene compound in which two indenyl ligand was connected by ethylene through 6 position of the indenyl ring cannot have such a conformational fluxtional motion.

It has been impossible to prepare exclusively meso-compound in the synthesis of the previously known bridged compounds. For example, S. Collins and R. B. Raush reported respectively in Journal of Organometallic Chemistry, vol. 342, 21 (1998) and Organometallics, vol. 10, 1501 (1991) that the rac- and meso-compounds are almost always obtained as a mixture and tedious separation step is necessary. Furthermore, because the meso-compound is usually minor isomer, it is not suitable to use meso isomer in industry. In this invention are disclosed novel structures of bridged ligands that give only meso isomers due to their stererochemistry and their novel bridged metallocene compounds.

### DETAILED DESCRIPTION OF THE INVENTION

This invention related to the transition metal compounds represented general structure (I): 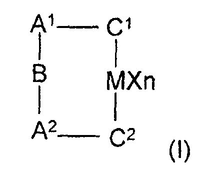 Where
M is a transition metal selected from of Group 3 or 4 or 5 or 6.
A¹ and A² are respectively and independently hydrocarbyl triradical consisting of more than two carbon atoms which are bonded to the cyclopentadienyl ring covalently, or 0 - 10 carbon atoms including one or more of B, N, P, S, O, or Si atom, in which the triradical may have same or different substituents containing 1 - 20 non-hydrogen atoms.
B is hydrocarbyl diradical containing 1 - 20 carbon atoms or substituted hydrocarbyl diradical containing 0 - 20 carbon atoms, B, N, P, S, O, or Si atoms in which the diradical may have same or different substituents containing 1 - 20 non-hydrogen atoms and the radicals joined to C¹ and C² to form bridge by covalent bonds.
C¹ and C² are respectively and independently triradical of cyclopentadienyl moiety which is covalently bonded to two radical sites of A¹ and A² and one radical site of M, in which the triradical may have same or different substituents containing 1 - 20 non-hydrogen atoms and the substituent may be hydrocarbyl radical with 1 - 20 carbon atoms or radical containing one or more of B, N, P, S, O, or Si atoms and 1 - 20 carbon atoms.
X is respectively and independently ligand of halogen, hydrocarbyl containing 1 - 20 carbon atoms, alkoxy, aryloxy, amide, arylamide, phosphide, arylphosphide, sulfide, or arylsulfide.
n is integer of 0 - 4 which depends on the oxidation state of M.

In above general formula (I), M can be, particularly, Ti, Zr, Hf, Sc, Cr, V, W and, more particularly, Ti, Zr, Hf. Illustrative but not limiting example of bridged cyclopentadienyl ligands (R¹-A¹-B-A²-R²) are bis(4-indenyl)methane, bis(5-indenyl)methane, bis(7-indenyl)methane, bis(1-fluorenyl)methane, bis(2-fluorenyl)methane, bis(3-fluorenyl)methane, bis(4-fluorenyl)methane, bis(4-(2)-indenyl)methane, bis(5-(2)-indenyl)methane, bis(5-(2)-indenyl)methane, bis(6-(2)-indenyl)methane, bis(7-(2)-indenyl)methane, bis(4-(1)-indenyl)methane, bis(5-(1-methyl)indenyl)methan, bis(6-(1-methyl)indenyl)methan, bis(7-(1-methyl)indenyl)methan, bis(4-(3-methyl)indenyl)methan, bis(5-(3-methyl)indenyl)methan, bis(6-(3-methyl)indenyl)methan, bis(7-(3-methyl)indenyl)methan, bis(4-(5-methyl)indenyl)methan, bis(5-(6-methyl)indenyl)methan, bis(6-(5-methyl)indenyl)methan, bis(7-(5-methyl)indenyl)methan, bis(4-(6-methyl)indenyl)methan, bis(5-(4-methyl)indenyl)methan, bis(6-(4-methyl)indenyl)methan, bis(7-(4-methyl)indenyl)methan, bis(4-(6-methyl)indenyl)methan, bis(5-(7-methyl)indenyl)methan, bis(6-(7-methyl)indenyl)methan, bis(7-(6-methyl)indenyl)methan, bis(4-(7-methyl)indenyl)methan, (4-(7-methyl)indenyl)(7-(4-methyl)indenyl)methan, (4-(7-methyl)indenyl)(5-(4-methyl)indenyl)methan, (4-(7-methyl)indenyl)(6-(4-methyl)indenyl)methan, bis(4-(2,5-dimethyl)indenyl)methan, bis(4-(2,6-dimethyl)indenyl)methan, bis(4-(2,7-dimethyl)indenyl)methan, bis(4-(1,5-dimethyl)indenyl)methan, bis(4-(1,6-dimethyl)indenyl)methan, bis(4-(1,2-dimethyl)indenyl)methan, bis(4-(2,3-dimethyl)indenyl)methan, bis(4-(5,6-dimethyl)indenyl)methan, bis(4-(5,7-dimethyl)indenyl)methan, bis(4-(6,7-dimethyl)indenyl)methan, bis(7-(2,5-dimethyl)indenyl)methan, bis(7-(1,5-dimethyl)indenyl)methan, bis(7-(1,6-dimethyl)indenyl)methan, bis(7-(1,2-dimethyl)indenyl)methan, bis(7-(2,3-dimethyl)indenyl)methan, bis(7-(5,6-dimethyl)indenyl)methan, bis(7-(4,5-dimethyl)indenyl)methan, bis(7-(4,6-dimethyl)indenyl)methan, (4-(2,7-dimethyl)indenyl)(7-(2,4-dimethyl)indenyl)methan, 1,2-bis(4-indenyl)ethane, 1,2-bis(5-indenyl)ethane, 1,2-bis(5-indenyl)ethane, 1,2-bis(7-indenyl)ethane, bis(4-(7-methyl)indenyl)ethane, (4-(7-methyl)indenyl) (7-(4-methyl)indenyl)ethane, (4-(7-methyl)indenyl) (5-(4-methyl)indenyl)ethane, (4-(7-methyl)indenyl) (6-(4-methyl)indenyl)ethane, bis(4-(2-methyl)-4,5,6,7-tetrahydroindenyl)methane, bis(5-(2-methyl)-4,5,6,7-tetrahydroindenyl)methane, bis(6-(2-methyl)-4,5,6,7-tetrahydroindenyl)methane, bis(7-(2-methyl)-4,5,6,7-tetrahydroindenyl)methane, bis(4-(1-methyl)-4,5,6,7-tetrahydroindenyl)methane, bis(5-(1-methyl)-4,5,6,7-tetrahydroindenyl)methane, bis(6-(1-methyl)-4,5,6,7-tetrahydroindenyl)methane, bis(7-(1-methyl)-4,5,6,7-tetrahydroindenyl)methane, bis(4-(3-methyl)-4,5,6,7-tetrahydroindenyl)methane, bis(5-(3-methyl)-4,5,6,7-tetrahydroindenyl)methane, bis(6-(3-methyl)-4,5,6,7-tetrahydroindenyl)methane, bis(7-(3-methyl)-4,5,6,7-tetrahydroindenyl)methane, bis(4-(5-methyl)-4,5,6,7-tetrahydroindenyl)methane, bis(5-(6-methyl)-4,5,6,7-tetrahydroindenyl)methane, bis(6-(5-methyl)-4,5,6,7-tetrahydroindenyl)methane, bis(7-(5-methyl)-4,5,6,7-tetrahydroindenyl)methane, bis(4-(6-methyl)-4,5,6,7-tetrahydroindenyl)methane, bis(4-(2-methyl)-4,5,6,7-tetrahydroindenyl)methane, bis(5-(4-methyl)-4,5,6,7-tetrahydroindenyl)methane, bis(6-(4-methyl)-4,5,6,7-tetrahydroindenyl)methane, bis(7-(4-methyl)-4,5,6,7-tetrahydroindenyl)methane, bis(4-(6-methyl)-4,5,6,7-tetrahydroindenyl)methane, bis(5-(7-methyl)-4,5,6,7-tetrahydroindenyl)methane, his(6-(7-methyl)-4,5,6,7-tetrahydroindenyl)methane, bis(7-(6-methyl)-4,5,6,7-tetrahydroindenyl)methane, bis(4-(2,5-dimethyl)-4,5,6,7-tetrahydroindenyl)methane, bis(4-(2,6-dimethyl)-4,5,6,7-tetrahydroindenyl)methane, bis(4-(2,7-dimethyl)-4,5,6,7-tetrahydroindenyl)methane, bis(4-(1,5-dimethyl)-4,5,6,7-tetrahydroindenyl)methane, bis(4-(1,6-dimethyl)-4,5,6,7-tetrahydroindenyl)methane, bis(4-(1,2-dimethyl)-4,5,6,7-tetrahydroindenyl)methane, bis(4-(2,3-dimethyl)-4,5,6,7-tetrahydroindenyl)methane, bis(4-(5,6-dimethyl)-4,5,6,7-tetrahydroindenyl)methane, bis(4-(5,7-dimethyl)-4,5,6,7-tetrahydroindenyl)methane, bis(4-(6,7-dimethyl)-4,5,6,7-tetrahydroindenyl)methane, bis(7-(2,5-dimethyl)-4,5,6,7-tetrahydroindenyl)methane, bis(7-(2,6-dimethyl)-4,5,6,7-tetrahydroindenyl)methane, bis(7-(2,4-dimethyl)-4,5,6,7-tetrahydroindenyl)methane, bis(7-(1,5-dimethyl)-4,5,6,7-tetrahydroindenyl)methane, bis(7-(1,6-dimethyl)-4,5,6,7-tetrahydroindenyl)methane, bis(7-(1,2-dimethyl)-4,5,6,7-tetrahydroindenyl)methane, bis(7-(2,3-dimethyl)-4,5,6,7-tetrahydroindenyl)methane, bis(7-(5,6-dimethyl)-4,5,6,7-tetrahydroindenyl)methane, bis(7-(4,5-dimethyl)-4,5,6,7-tetrahydroindenyl)methane, bis(7-(4,6-dimethyl)-4,5,6,7-tetrahydroindenyl)methane, 1,2-bis(4--4,5,6,7-tetrahydroindenyl)ethane, 1,2-bis(5--4,5,6,7-tetrahydroindenyl)ethane, 1,2-bis(6--4,5,6,7-tetrahydroindenyl)ethane, 1,2-bis(7--4,5,6,7-tetrahydroindenyl)ethane, 1,3-bis(1-fluorenyl)propane, 1,2-bis(2-fluorenyl)ethane, 1,2-bis(3-fluorenyl)ethane, 1,2-bis(4-fluorenyl)ethane, 1,2-bis(4-(2-methyl)indenyl)ethane, 1,2-bis(5-(2-methyl)indenyl)ethane, 1,2-bis(6-(2-methyl)indenyl)methane, 1,2-bis(7-(2-methyl)indenyl)ethane, 1,2-bis(4-(1-methyl)indenyl)ethane, 1,2-bis(5-(1-methyl)indenyl)methane, 1,2-bis(6-(1-methyl)indenyl)methane, 1,2-bis(7-(1-methyl)indenyl)ethane, 1,2-bis(4-(3-methyl)indenyl)ethane, 1,2-bis(5-(3-methyl)indenyl)ethane, 1,2-bis(6-(3-methyl)indenyl)ethane, 1,2-bis(7-(3-methyl)indenyl)ethane, 1,2-bis(4-(5-methyl)indenyl)ethane, 1,2-bis(5-(6-methyl)indenyl)ethane, 1,2-bis(6-(5-methyl)indenyl)ethane, 1,2-bis(7-(5-methyl)indenyl)ethane, 1,2-bis(4-(6-methyl)indenyl)ethane, 1,2-bis(5-(7-methyl)indenyl)ethane, 1,2-bis(6-(7-methyl)indenyl)ethane, 1,2-bis(7-(6-methyl)indenyl)ethane, 1,2-bis(4-(2,5-dimethyl)indenyl)ethane, 1,2-bis(4-(2,6-dimethyl)indenyl)ethane, 1,2-bis(4-(2,7-dimethyl)indenyl)ethane, 1,2-bis(4-(1,5-dimethyl)indenyl)ethane, 1,2-bis(4-(1,6-dimethyl)indenyl)ethane, 1,2-bis(4-(1,2-dimethyl)indenyl)ethane, 1,3-bis(4-(2,3-dimethyl)propane, 1,2-bis(4-(5,6-dimethyl)indenyl)ethane, 1,2-bis(4-(5,7-dimethyl)indenyl)ethane, 1,2-bis(4-(6,7-dimethyl)indenyl)ethane, 1,2-bis(5-(2,3-dimethyl)indenyl)ethane, 1,2-bis(-(2,6-dimethyl)indenyl)ethane, 1,2-bis(5-(2,4-dimethyl)indenyl)ethane, 1,2-bis(5-(1,2-dimethyl)indenyl)ethane, 1,2-bis(5-(1,3-dimethyl)indenyl)ethane, 1,2-bis(5-(1,4-dimethyl)indenyl)ethane, 1,2-bis(5-(2,3-dimethyl)indenyl)ethane, 1,2-bis(5-(4,6-dimethyl)indenyl)ethane, 1,2-bis(5-(4,7-dimethyl)indenyl)ethane, 1,2-bis(5-(3,6-dimethyl)indenyl)ethane, 1,2-bis(5-(3,7-dimethyl)indenyl)ethane, 1,2-bis(6-(2,5-dimethyl)indenyl)ethane, 1,2-bis(6-(2,4-dimethyl)indenyl)ethane, 1,2-bis(6-(2,3-dimethyl)indenyl)ethane, 1,2-bis(6-(1,5-dimethyl)indenyl)ethane, 1,2-bis(6-(1,3-dimethyl)indenyl)ethane, 1,2-bis(6-(1,2-dimethyl)indenyl)ethane, 1,2-bis(6-(5,7-dimethyl)indenyl)ethane, 1,2-bis(6-(4,5-dimethyl)indenyl)ethane, 1,2-bis(6-(1,4-dimethyl)indenyl)ethane, 1,2-bis(7-(2,5-dimethyl)indenyl)ethane, 1,2-bis(7-(2,6-dimethyl)indenyl)ethane, 1,2-bis(7-(2,4-dimethyl)indenyl)ethane, 1,2-bis(7-(1,5-dimethyl)indenyl)ethane, 1,2-bis(7-(1,6-dimethyl)indenyl)ethane, 1,2-bis(7-(1,2-dimethyl)indenyl)ethane, 1,2-bis(7-(2,3-dimethyl)indenyl)ethane, 1,2-bis(7-(5,6-dimethyl)indenyl)ethane, 1,2-bis(7-(4,5-dimethyl)indenyl)ethane, 1,2-bis(7-(4,6-dimethyl)indenyl)ethane, bis-(4-(1,2,3-trimethyl)indenyl)methane, bis-(7-(1,2,4-trimethyl)indenyl)methane, 1,2-bis-(7-(1,2,4-trimethyl)indenyl)methane, bis-(4-(1,2,7-trimethyl)indenyl)methane, bis-(4-(1,3,5-trimethyl)indenyl)methane, 1,2-bis-(5-(1,2,4-trimethyl)indenyl)methane, 1,2-bis-(6-(1,2,3-trimethyl)indenyl)methane, 1,2-bis-(7-(4,5,6-trimethyl)indenyl)methane, 1,3-bis-(4-(5,6,7-trimethyl)indenyl)propane, 1,2-bis-(6-(4,5,7-trimethyl)indenyl)ethane, 1,2-bis-(5-(4,6,7-trimethyl)indenyl)ethane, bis-(4-(5,6,7-trimethyl)indenyl)methane, bis-(4-(1,2,3,5-tetramethyl)indenyl)methane, bis-(7-(1,2,3,4-tetramethyl)indenyl)methane, 1,2-bis-(7-(1,2,3,4-tetramethyl)indenyl)ethane, bis-(4-(2,5,6,7-tetramethyl)indenyl)methane, bis-(4-(1,3,5,6-tetramethyl)indenyl)methane, 1,2-bis-(5-(1,2,3,4-tetramethyl)indenyl)methane, 1,2-bis-(6-(1,2,3,4-tetramethyl)indenyl)methane, 1,2-bis-(7-(2,4,5,6-tetramethyl)indenyl)methane, 1,2-bis-(4-(2,5,6,7-tetramethyl)indenyl)methane, 1,2-bis-(6-(3,4,5,7-tetramethyl)indenyl)methane, 1,2-bis-(5-(1,4,6,7-tetramethyl)indenyl)methane, 1,2-bis-(4-(1,5,6,7-tetramethyl)indenyl)methane, (4-indenyl)(4-(1-methyl)indenyl)methane, bis(4-indenyl)methylmethane, bis(4-(2-methyl)indenyl)dimethylmethane, (4-fluorenyl)(4-indenyl)methane, 1-,2-bis(5-indenyl)-1,2-dimethylethane, 1,2-bis(4-(2-methyl)-4,5,6,7-tetrahydroindenyl)ethane, 1,2- bis(5-(2-methyl)-4,5,6,7-tetrahydroindenyl)ethane, 1,2- bis(6-(2-methyl)-4,5,6,7-tetrahydroindenyl)ethane, 1,2-bis(7-(2-methyl)-4,5,6,7-tetrahydroindenyl)ethane, 1,2- bis(4-(1-methyl)-4,5,6,7-tetrahydroindenyl)ethane, 1,2- bis(5-(1-methyl)-4,5,6,7-tetrahydroindenyl)ethane, 1,2-bis(6-(1-methyl)-4,5,6,7-tetrahydroindenyl)ethane, 1,2- bis(7-(1-methyl)-4,5,6,7-tetrahydroindenyl)ethane, 1,3- bis(4-(3-methyl)-4, 5,6,7-tetrahydroindenyl)propane, 1,2-bis(4-(3-methyl)-4,5,6,7-tetrahydroindenyl)ethane, 1,2-bis(6-(3-methyl)-4,5,6,7-tetrahydroindenyl)ethane, 1,2- bis(7-(3-methyl)-4, 5,6,7-tetrahydroindenyl)ethane, 1,2-bis(4-(5-methyl)-4,5,6,7-tetrahydroindenyl)ethane, 1,2-bis(5-(6-methyl)-4,5,6,7-tetrahydroindenyl)ethane, 1,2- bis(6-(5-methyl)-4,5,6,7-tetrahydroindenyl)ethane, 1,2-bis(7-(5-methyl)-4,5,6,7-tetrahydroindenyl)ethane, 1,2-bis(4-(6-methyl)-4,5,6,7-tetrahydroindenyl)ethane, 1,2- bis(5-(4-methyl)-4,5,6,7-tetrahydroindenyl)ethane, 1,2-bis(6-(4-methyl)-4,5,6,7-tetrahydroindenyl)ethane, 1,2-bis(7-(4-methyl)-4,5,6,7-tetrahydroindenyl)ethane, 1,2- his(4-(6-methyl)-4,5,6,7-tetrahydroindenyl)ethane, 1,2-bis(5-(7-methyl)-4,5,6,7-tetrahydroindenyl)ethane, 1,2-bis(6-(7-methyl)-4,5,6,7-tetrahydroindenyl)ethane, 1,2- bis(7-(6-methyl)-4,5,6,7-tetrahydroindenyl)ethane, 1,2-bis(4-(2,5-dimethyl)-4,5,6,7-tetrahydroindenyl)ethane, 1,2-bis(4-(2,6-dimethyl)-4,5,6,7-tetrahydroindenyl)ethane, 1,2- bis(4-(2,7-dimethyl)-4,5,6,7-tetrahydroindenyl)ethane, 1,2-bis(4-(1,5-dimethyl)-4,5,6,7-tetrahydroindenyl)ethane, 1,2-bis(4-(1,6-dimethyl)-4,5,6,7-tetrahydroindenyl)ethane, 1,2- bis(4-(1,2-dimethyl)-4,5,6,7-tetrahydroindenyl)ethane, 1,3-bis(4-(2,3-dimethyl)-4,5,6,7-tetrahydroindenyl)ethane, 1,2-bis(4-(5,6-dimethyl)-4,5,6,7-tetrahydroindenyl)ethane, 1,2- bis(4-(5,7-dimethyl)-4,5,6,7-tetrahydroindenyl)ethane, 1,2-bis(4-(6,7-dimethyl)-4,5,6,7-tetrahydroindenyl)ethane, 1,2-bis(5-(2,3-dimethyl)-4,5,6,7-tetrahydroindenyl)ethane, 1,2-bis(5-(2,6-dimethyl)-4,5,6,7-tetrahydroindenyl)ethane, 1,2-bis(5-(2,4-dimethyl)-4,5,6,7-tetrahydroindenyl)ethane, 1,2-bis(5-(1,2-dimethyl)-4,5,6,7-tetrahydroindenyl)ethane, 1,2-bis(5-(1,3-dimethyl)-4,5,6,7-tetrahydroindenyl)ethane, 1,2-bis(5-(1,4-dimethyl)-4,5,6,7-tetrahydroindenyl)ethane, 1,2-bis(5-(2,3-dimethyl)-4,5,6,7-tetrahydroindenyl)ethane, 1,2-bis(5-(4,6-dimethyl)-4,5,6,7-tetrahydroindenyl)ethane, 1,2-bis(5-(4,7-dimethyl)-4,5,6,7-tetrahydroindenyl)ethane, 1,2-bis(5-(3,6-dimethyl)-4,5,6,7-tetrahydroindenyl)ethane, 1,2-bis(6-(2,5-dimethyl)-4,5,6,7-tetrahydroindenyl)ethane, 1,2-bis(6-(2,4-dimethyl)-4,5,6,7-tetrahydroindenyl)ethane, 1,2-bis(6-(2,3-dimethyl)-4,5,6,7-tetrahydroindenyl)ethane, 1,2-bis(6-(1,5-dimethyl)-4,5,6,7-tetrahydroindenyl)ethane, 1,2-bis(6-(1,3-dimethyl)-4,5,6,7-tetrahydroindenyl)ethane, 1,2-bis(6-(1,2-dimethyl)-4,5,6,7-tetrahydroindenyl)ethane, 1,2-bis(6-(2,3-dimethyl)-4,5,6,7-tetrahydroindenyl)ethane, 1,2-bis(6-(5,7-dimethyl)-4,5,6,7-tetrahydroindenyl)ethane, 1,2-bis(6-(4,5-dimethyl)-4,5,6,7-tetrahydroindenyl)ethane, 1,2-bis(6-(1,4-dimethyl)-4,5,6,7-tetrahydroindenyl)ethane, 1,2-bis(7-(2,5-dimethyl)-4,5,6,7-tetrahydroindenyl)ethane, 1,2-bis(7-(2,6-dimethyl)-4,5,6,7-tetrahydroindenyl)ethane, 1,2-bis(7-(2,4-dimethyl)-4,5,6,7-tetrahydroindenyl)ethane, 1,2-bis(7-(1,5-dimethyl)-4,5,6,7-tetrahydroindenyl)ethane, 1,2-bis(7-(1,6-dimethyl)-4,5,6,7-tetrahydroindenyl)ethane, 1,2-bis(7-(1,2-dimethyl)-4,5,6,7-tetrahydroindenyl)ethane, 1,2-bis(7-(2,3-dimethyl)-4,5,6,7-tetrahydroindenyl)ethane, 1,2-bis(7-(5,6-dimethyl)-4,5,6,7-tetrahydroindenyl)ethane, 1,2-bis(7-(4,5-dimethyl)-4,5,6,7-tetrahydroindenyl)ethane, 1,2-bis(7-(4,6-dimethyl)-4,5,6,7-tetrahydroindenyl)ethane, bis(4-(1,2,4-trimethyl)-4,5,6,7-tetrahydroindenyl)methane, bis(7-(1,2,4-trimethyl)-4,5,6,7-tetrahydroindenyl)methane, 1,2-bis(7-(1,2,4-trimethyl)-4,5,6,7-tetrahydroindenyl)methane, bis(4-(1,2,7-trimethyl)-4,5,6,7-tetrahydroindenyl)methane, bis(4-(1,3,5-trimethyl)-4,5,6,7-tetrahydroindenyl)methane, 1,2-bis(5-(1,2,4-trimethyl)-4,5,6,7-tetrahydroindenyl)ethane, 1,2-bis(6-(1,2,3-trimethyl)-4,5,6,7-tetrahydroindenyl)ethane, 1,3-bis(5-(5,6,7-trimethyl)-4,5,6,7-tetrahydroindenyl)propane, 1,2-bis(-(4,5,7-trimethyl)-4,5,6,7-tetrahydroindenyl)ethane, 1,2-bis(5-(13,6,7-trimethyl)-4,5,6,7-tetrahydroindenyl)ethane, 1,2-bis(4-(5,6,7-trimethyl)-4,5,6,7-tetrahydroindenyl)methane, bis(4-(1,2,3,5-tetramethyl)-4,5,6,7-tetrahydroindenyl)methane, bis(7-(1,2,3,4-tetramethyl)-4,5,6,7-tetrahydroindenyl)methane, 1,2-bis(7-(1,2,3,4-tetramethyl)-4,5,6,7-tetrahydroindenyl)ethane, bis(4-(2,5,6,7-tetramethyl)-4,5,6,7-tetrahydroindenyl)methane, bis(4-(1,3,5,6-tetramethyl)-4,5,6,7-tetrahydroindenyl)methane, 1,2-bis(5-(1,2,3,4-tetramethyl)-4,5,6,7-tetrahydroindenyl)ethane, 1,2bis(6-(1,2,3,4-tetramethyl)-4,5,6,7-tetrahydroindenyl)ethane, 1,2-bis(7-(2,4,5,6-tetramethyl)-4,5,6,7-tetrahydroindenyl)ethane, 1,2-bis(4-(2,5,6,7-tetramethyl)-4,5,6,7-tetrahydroindenyl)ethane, 1,2-bis(6-(3,4,5,7-tetramethyl)-4,5,6,7-tetrahydroindenyl)ethane, 1,2-bis(5-(1,4,6,7-tetramethyl)-4,5,6,7-tetrahydroindenyl)ethane, 1,2-bis(4-(1,5,6,7-tetramethyl)-4,5,6,7-tetrahydroindenyl)ethane, (4-4,5,6,7-tetrahydroindenyl)(4-(1-methyl)-4,5,6,7-tetrahydroindenyl)methane, bis(4--4,5,6,7-tetrahydroindenyl)methylmethane, bis(4-(2-methyl)-4,5,6,7-tetrahydroindenyl)dimethylmethane, (4-fluorenyl)(4--4,5,6,7-tetrahydroindenyl)methan, 1,2-bis(5-4,5,6,7- tetrahydroindenyl)-1,2-dimethylethane, 1,3-bis(4-indenyl)propane

Bridged cyclopentadienyl ligands of this invention are not restricted by above examples. This invention include all compounds represented by general formula (I) by the variation of the substituents of the ligands, M, X and n.

An example of the structure of the rac-metallocene compounds prepared according to this invention is depicted in general formula (X). 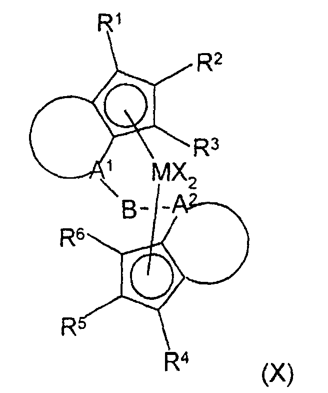 where M, X, A¹, A², and B are same as described above and R¹ - R⁶ is are respectively same or different substituent containing 1 - 20 non-hydrogen atoms.

The structure represented by general formula (X) is very different from that of previously well-known rac-metallocene compounds where bridge is directly connected with the carbon atoms of the cyclopentadienyl ring. Furthermore, the bridge B and the position of A¹ and A² can be freely controlled. While there is conformational fluxional motion in well-known racethylenebis(1-indenyl)zirconium dichloride, the rac-bridged metallocenes depicted in formula (X) have not such a conformational fluxtional motion due to the rigidity of the structure.

Structure of the meso-metallocene compounds prepared according to this invention is depicted in general formula (XI). 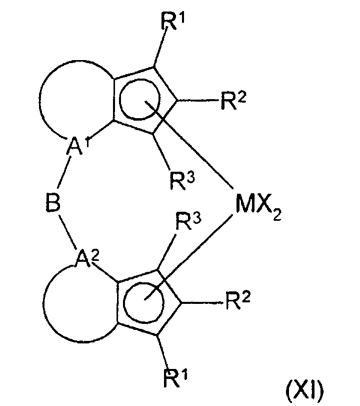 Where M, X, A¹, A², R¹ - R⁶ are same as described above.

There have not been reasonable way to synthesize exclusively meso-compounds but this invention gives way to synthesize exclusively meso-compounds by controlling the position of A¹ and A² and length of B so that it may impossible to form rac-compounds.

For example, (substituted) bis(5-indenyl)methane or (substituted) 1,2-bis(5-indenyl)ethane cannot form rac-complexes when they are transformed to metallated complexes.

Compounds depicted general formula (I) can be used for the olefin polymerization or copolymerization with cocatalysts represented by general formula (II) or (III) or (IV):

-[Al(R⁷)-O)ₘ- (II)

where R⁷ is halogen radical, hydrocarbyl radical containing 1 - 10 carbon atoms, hydrocarbyl radical containing 1 - 10 carbon atoms substituted with halogen, m is integer more than 2, each of R⁷ is different or same.

N(R⁸)₃ (III)

where N is aluminum or boron atom, R⁸ is same as described for R⁷, each R⁸ is same or different.

Q[N(R⁹)₄] (IV)

where Q is inorganic or organic cation charged with +1, N is aluminum or boron, R⁹ is same described for R⁷, and each R⁹ is same or different. Alkylaluminoxane compounds depicted general formula (II) can be exist as linear or cyclic or net form, each of which can be used as a single compound or a mixture.

Examples of alkylaluminoxanes represented by above general formula (II) are methylaluminoxane, ethylaluminoxane, isobutylaluminocane, butylalumninoxane, hexylalumninoxane,octylaluminoxane, ect.

Examples of alkylmetalcompouds represented by above general formula (III) are trimethylaluminum, triethylaluminum, triisobutylaluminum, tripropylaluminum, tributylaluminum, dimetylchloroaluninum, dimetylisobutylaluminum, dimetylethylaluminum, diethylchloroaluminum, triisopropylaluminum, tri-sec-butylaluminum, tricyclopenthyaluminum, tripentylaluminum, triisopentylaluminum, trihexylaluminum, trioctylaluminum, ethyldimethlaluminum, metyldiethylaluminum, tripenylaluminum, tri-p-tolylaluminum, dimetylaluminummetoxide, trimetylboron, triethylboron, triisobuthylboron, tripropylboron, tributylboron, etc.

Examples of ionic compound represented by the above general formula(IV) are triethylammoniumtetraphenylboron, tributhylammoniumtetraphenylboron, tripropylammoniumtetraphenylboron, trimetylammonium(p-tolyl)boron, tripropylammoniumtetra(p-tolyl)boron, triethylammoniumtetra(o,p-dimetylphenyl)boron, trimethylammoniumtetra(o,p-dimetylphenyl)boron, tributhylammoniumtetra(p-trifluorometylphenyl)boron, trimethylammoniumtetra(p-trichlorometylphenyl)boron, tributhylammoniumtetrapentafluorophenylboron, N,N-diethylanilinumtetraphenylboron, N,N-diethylanilinumtetraphenylboron, N,N-diethylanilinumpentafluorophenylboron, diethylammoniumtetrapentafluorophenylboron, triphenylphosphoniumtetraphenylboron, triphenylphosphoniumtetraphenylboron, triethylammmoniumtetraphenylaluminum, tributhylammmoniumtetraphenylaluminum, trimethylammmoniumtetraphenylaluminum, tripropylammmoniumtetraphenylaluminum, trimethylammmoniumtetra(p-tolyl)aluminum, tripropylammmoniumtetra(p-tolyl)aluminum, triethylammmoniumtetra(o,p-dimethylphenyl)aluminum, trimethylammmoniumtetra(p-trichloromethylphenyl)aluminum, tributhylammmoniumtetra(p-trichloromethylphenyl)aluminum, tributhylammoniumtetrapentaflorophenylaluminum, N,N-diethylanilinumtetraphenylaluminum, N,N-diethylanilinumtetraphenylaluminum, N,N-diethylanilinumtetrapentafluorophenylaluminum, diethylammoniumtetrapentafluorophenylaluminum, triphenylphosphoniumtetraphenylaluminum, trimethylphosphoniumtetraphenylaluminum, trimethylphosphoniumtetraphenylaluminum, triethylammoniumtetraphenylboron, tributhylammoniumtetraphenylboron, trimethylammoniumtetraphenylboron, tripropylammoniumtetraphenylboron, trimethylammoniumtetra(p-tolyl)boron, tripropylammoniumtetra(p-tolyl)boron, triethylammoniumtetra(o,p-dimethylphenyl)boron, trimethylammoniumtetra(o,p-dimethylphenyl)boron, tributhylammoniumtetra(p-trifluoromethylphenyl)boron, trimethylammoniumtetra(p-trifluoromethylphenyl)boron, tributhylammoniumtetrapentafluorophenylboron, N,N-diethylanilinumtetraphenylboron, N,N-diethylanilinumtetrapentafluorophenylboron, diethylammoniumtetrapentafluorophenylboron, triphenylphorphoniumtetraphenylboron, triphenylcarboniumtetraphenylboron, triphenylcarboniumtetraphenylboron, triphenylcarboniumtetraphenylaluminum, triphenylcarboniumtetra(p-trifluoromethylphenyl)boron, triphenylcarboniumtetrapentafluorophenylboron etc.

The polymerization of the present invention can be conducted in a conventional manner. For example, a suitable amount of an inert organic solvent and a small amount of cocatalyst are added to a glass reactor. At this stage, if a liquid monomer is to be imployed, it is introduced into the reactor together with a suitable solvent. In case of a gaseous monomer, it is charged to the reactor to a preset pressure. Then, a catalyst solution is added thereto e. g., by imploying a syringe to initiate the polymerization.

The polymerization may be conducted at a temperature ranging from 0 to 500 °C under a pressure ranging from 10 to 500 psig. The cocatalyst may be used in an amount ranging 1 to 100,000 molar equivalents based on the metallocene catalyst. Contacting order or introducing order of catalyst, cocatalyst, solvent, olefin monomer or comonomer is not limited. After polymerization for a suitable time, the polymerization reaction was quenched by adding ethanol containing hydrochloric acid. The polymer can be obtained by filtering and washing with methanol. The polymer was dried in vacuum oven.

The following example are intended to illustrate the present invention more specifically, without limiting the scope of the invention.

In the examples, organic reagents and solvent used in the preparation of the catalysts and polymerization were provided from Aldrich, Strem, Sigma, Acros, B & J, Lancaster, Merck and then purified in accordance with a standard method (D. D. Perrin, "Purification of Laboratory Chemicals" 3^{rd} ed., Pergamon Press plc: Oxford, 1988). Air sensitive compounds were prepared and handled according to the standard Schlenk technique or in a glove box under purified nitrogen or argon (D. F. Shriver, "The manipulation of air-sensitive compounds" 2^{nd} ed., John & Wiley: New York, 1986). The alkyl aluminum compounds were purchased from Akzo and Witco. The comparative metallocene compounds were purchased from Aldrich and used without further purification. High purity gaseous monomers from Applied Gas Technology were passed through moisture and oxygen traps. Liquid monomers from Aldrich were used after a standard purification. In all steps of catalyst preparation and polymerization, air and moisture were blocked from reaction system in order to increase the reproducibility of the experiments.

The structures of catalyst synthesized were confirmed by using 270 MHz FR-NMR (Jeol Co.). The molecular weight of a polymer was measured with High Temperature Gel Permeation Chromatography (GPC) (150CV, Waters in U.S.A) and trichlorobenzene as a solvent at a temperature of 140°C.

### Example 1

### Step1 : synthesis of 1,2-di(p-tolyl)ethane

### Method 1

Two moles of 4-methyl benzyl bromide were coupled by a modification of the Burtz coupling reaction (J. March, Advanced Organic Chemistry, 449-451, 4^{th} ed., 1992, A Wiley-Interscience). Into a 250ml schlenk flask were added 12.5g of sodium, 50g of α-bromo xylene dissolved in 150ml tetrahydrofuran and then the reaction mixture were reacted 7days at argon atmosphere. Alcohol was added to quench the reaction. After water was added, the product was extracted with diethyl ether. The organic layer was collected and dried with anhydrous magnesium sulfate. After filtering to remove the magnesium sulfate, all solvent were removed by evaporation with rotary evaporator. The pure compound was obtained by recrystallization in ethanol. Yield was 26.92g (94.8 %).
¹H NMR (300MHz: DMSO-d₃): δ7.10 (s, 8H), 2.87 (s, 4H), 2.33 (s, 6H)

### Method 2

This was prepared by a modification of the known method (J.H.Gerdner and P. Borgstrom, Journal of American Chemical Society, 51, 3375.1929). 20g of 4-methyl benzyl chloride was added dropwise to 3.8g of magnesium in 100ml of tetrahydrofuran and the reaction mixture was stirred to make Grignard reagent. This Grignard reagent was added to the same mole of silver bromide slurry in fresh dried tetrahydrofurane. After reflux for 1 hour, the reaction mixture was cooled to room temp. All solids were removed by filtration. After water and diethyl ether were added, the organic layer was collected. After drying with anhydrous magnesium sulfate and all solvent was removed at reduced pressure. The product was purified by column chromatoghaphy. The yield was 21g (70 %).

### Method 3

20g of 4-methyl benzyl chloride is added dropwise to schlenk flask containing 3.8g of magnesium and 100ml of tetrahydrofuran to make Grignard reagent. This Grignard reagent was added to the Schlenk flask containing the same mole of 4-methyl benzylchloride in fresh dried tetrahydrofurane. After the reaction mixture was refluxed for 3 hours, it was cooled to room temperature. Aqueous saturated ammonium chloride solution was poured, and the product was extracted with diethyl ether. The organic layer was collected and dried with anhydrous magnesium sulfate. After filtering to remove the magnesium sulfate, all solvent were removed by evaporation with rotary evaporator. The pure compound was obtained by column chromatography. Yield was 9.1 g (30 %).

### Step 2: Synthesis of 1,2-bis(7-2,4-dimethyl)indanonyl)ethan

1,2-di(p-tolyl)ethan and 2-bromoisobutyryl bromide reacted to give 1,2-(7-(2,5-dimethyl)indanonyl)ethan by reported procedure (Stehling et al. Organometallics, 13, 968 (1994)). Pure compound was obtained by recrystallization in petroleum ether.
¹H NMR(300MHz: DMSO-d₃): δ 7.19-7.01(dd, 4H), 3.19-3.09(m, 2H). 2.90(s, 4H), 2.59(s, 6H), 2.61-2.31(m, 4H), 1.24-1.20(q, 6H)

### Step 3: synthesis of 1,2-bis(7-(2,4-dimethyl)indenyl)ethan

To a flask was added successively 1,2-bis(7-(2,4-dimethyl)indanonyl)ethan and 40ml of tetrahydrofuran and 40ml of ethanol solution 3.5g of sodium borohydride at 0 °C. After stirring for 16 hours, 100g of ice was added. HCI was added until pH of the solution was about 1. The product was extracted with diethyl ether three times. The combined diethyl ether was washed with aqueous sodium bicarbonate. The organic layer was collected and dried with anhydrous magnesium sulfate. After filtering to remove the magnesium sulfate, all solvent were removed by evaporation with rotary evaporator to give residue, 1,2-bis(7-(2,4-dimethyl)indanolyl)ethan, which was used without further purification. To the flask containing the residue was added toluene and 0.2 g of mono hydrated p-tolunesulfonic acid. The reaction mixture was refluxed for 2 hours. The mixture was washed with aqueous sodium bicarbonate. The organic layer was dried with anhydrous magnesium sulfate and the solvent was removed with rotary evaporator. The product was purified by column chromatography. Yield was 92.5 % (4.16 g).
¹H NMR (300MHz: CDCl₃): δ 7.01-6.98(dd, 4H), 6.58(s, 2H), 3.19(s, 4H), 2.92(s, 4H), 2.37(s, 6H), 2.16(s, 6H)

### Step 4: synthesis of ethylenebis(7-(2,4-dimethyl)indenyl)zirconium dichloride.

To a Schlenk flask containing 1.36g of 1,2-bis(7-(2,4-dimethyl)indenyl)ethan was added 20ml of freshly dried hexane, 2.5M n-butyl lithium 3.5ml in argon atmosphere. After stirring for 17 hours , 1 g of zirconium tetrachloride was added at room temp. The mixture was stirred for 18 hours. Dark gray solid was isolated by decantation of the solvent. This solid was extracted with 20ml of dichloromethan three times. The obtained yellow solution was evaporated under reduced pressure to become about 20 ml. To the solution was added hexane to recrystallize the product. Orange solid of title compound was obtained. The yield was 0.5 g.
¹H NMR (300MHz: CD₂Cl₂): δ 6.89-6.33(m, 4H), 3.39-3.19(m. 2H), 2.33-2.30(d, 6H)

### Step 5: polymerization of ethylene

To a 400 ml of glass reactor was added 200 ml hexane, 4.0 ml methylaluminoxan (MAO, toluene solution, 6.4 w% Al). At 80 °C, 0.008 mmole of ethylene bis(7-(2,4-dimethyl)indenyl)zirconium dichloride dissolved in 0.5ml toluene was added. Ethylene was fed continuously for 10 minutes under the pressure of 40 psig with vigorous stirring. 20ml of ethanol was added to finish the polymerization. 10% HCl methanol solution was poured. The solid product was collected and washed with methaol. The polymer was dried at 60 °C vacuum over. Yield was 7.45 g. Activity of catalyst was 1.9 Kg(PE) /mmol(Zr)h.

### Example 2

Ethylene and norbornene copolymerization was done using the same catalyst made in step 4 of example 1.

To a 400 ml of glass reactor was added 250 ml of hexane solution of nobornene (30 g), and 4.0 ml of methylaluminoxan (MAO, toluene solution, 6.4 w % Al). At 80 °C, 0.008 mmole of ethylene bis(7-(2,4-dimethyl)indenyl)zirconium dichloride dissolved in 0.5 ml toluene was added. Ethylene was fed continuously for 10 minutes under the pressure of 40 psig with vigorous stirring. 20ml of ethanol was added to finish the polymerization. 10% HCI methanol solution was poured. The solid product was collected and washed with methaol. The polymer was dried at 60 °C vacuum oven. Yield was 14.5 g. Activity of catalyst was 7.25 Kg(PE) / mmol(Zr)h.

## Claims

1. The compounds represented by general formula (I): 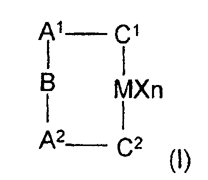 where
M is a transition metal selected from of Group 3 or 4 or 5 or 6.
A¹ and A² are respectively and independently hydrocarbyl triradical consisting of more than two carbon atoms which are bonded to the cyclopentadienyl ring covalently, or 0 - 10 carbon atoms including one or more of B, N, P, S, O, or Si atom, in which the triradical may have same or different substituents containing 1 - 20 non-hydrogen atoms.
B is hydrocarbyl diradical containing 1 - 20 carbon atoms or substituted hydrocarbyl diradical containing 0 - 20 carbon atoms, B, N, P, S, O, or Si atoms in which the diradical may have same or different substituents containing 1 - 20 non-hydrogen atoms and the radicals joined to C¹ and C² to form bridge by covalent bonds.
C¹ and C² are respectively and independently triradical of cyclopentadienyl moiety which is covalently bonded to two radical sites of A¹ and A² and one radical site of M, in which the triradical may have same or different substituents containing 1 - 20 non-hydrogen atoms and the substituent may be hydrocarbyl radical with 1 - 20 carbon atoms or radical containing one or more of B, N, P, S, O, or Si atoms and 1 - 20 carbon atoms.
X is respectively and independently ligand of halogen, hydrocarbyl containing 1 - 20 carbon atoms, alkoxy, aryloxy, amide, arylamide, phosphide, arylphosphide, sulfide, or arylsulfide.
n is integer of 0 - 4 which depends on the oxidation state of M.

2. The method for the preparation of homopolymers or copolymers of ethylene, α -olefin, or cycloolefin by using the compounds represented by general formula (I) as catalyst and one or more of aluminum or boron compounds as cocatalyst. 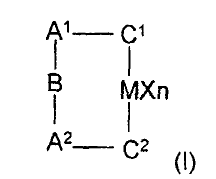 (where M, A¹, A², C¹, C², B, X, n are same as described in claim 1)

3. The method of claim 2, wherein cocatalyst is represented by general formula (II) which can exist as linear or cyclic or netty form.
-[Al(R⁷)-O)ₘ- (II)
where R⁷ is halogen radical, hydrocarbyl radical containing 1 - 10 carbon atoms, or hydrocarbyl radical containing 1 - 10 carbon atoms substituted with halogen, m is integer greater than 2, each of R⁷ is different or same.

4. The method of claim 2, wherein cocatalyst is represented by general formula (III).
N(R⁸)₃ (III)
where N is aluminum or boron atom, R⁸ is halogen radical, hydrocarbyl radical containing 1 - 10 carbon atoms, hydrocarbyl radical containing 1 - 10 carbon atoms substituted with halogen, and each of R⁸ is same or different.

5. The method of claim 2, wherein cocatalyst is represented by general formula (VI).
Q[N(R⁹)₄] (IV)
where Q is inorganic or organic cation charged with +1, N is aluminum or boron, R⁹ is halogen radical, hydrocarbyl radical containing 1 - 10 carbon atoms, hydrocarbyl radical containing 1 - 10 carbon atoms substituted with halogen, each R⁹ is same or different.

6. The compounds represented by general formula (X): 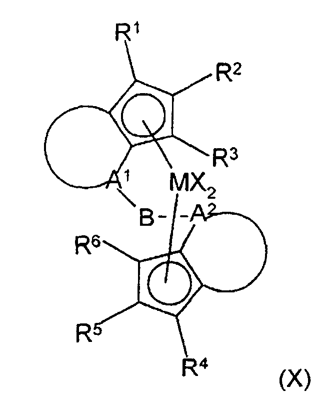 where
M is a transition metal selected from Group 3, 4, 5, or 6.
A¹ and A² are respectively and independently hydrocarbyl triradical consisting of more than two carbon atoms which are bonded to the cyclopentadienyl ring covalently, or 0 - 10 carbon atoms including one or more of B, N, P, S, O, or Si atom, in which the triradical may have same or different substituents containing 1 - 20 non-hydrogen atoms.
B is hydrocarbyl diradical containing 1 - 20 carbon atoms or substituted hydrocarbyl diradical containing 0 - 20 carbon atoms, B, N, P, S, O, or Si atoms in which the diradical may have same or different substituents containing 1 - 20 non-hydrogen atoms and the radicals joined to C¹ and C² to form bridge by covalent bonds.
R¹ - R⁶ are respectively same or different substituent containing 1- 20 non-hydrogen atoms.
X is respectively and independently ligand of halogen, hydrocarbyl containing 1 - 20 carbon atoms, alkoxy, aryloxy, amide, arylamide, phosphide, arylphosphide, sulfide, or arylsulfide.

7. The compounds represented by general formula (X): 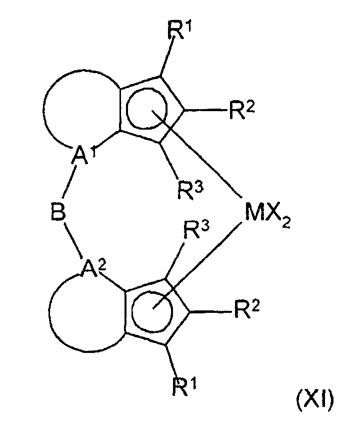 where M, A1, A2, B, R¹ - R⁶, and X is same as described in claim 6.

## Patentansprüche

1. Durch die folgende allgemeine Formel (I) dargestellte Verbindungen, 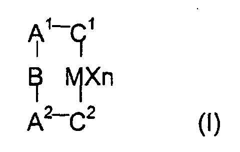 wobei
M ein Übergangsmetall ist, das aus der Gruppe 3, 4, 5 oder 6 ausgewählt ist, A¹ und A² jeweils und unabhängig voneinander Hydrocarbyltriradikale sind, die jeweils aus mehr als zwei Kohlenstoffatomen bestehen, die kovalent an den Cyclopentadienylring angebunden sind oder aus 0 bis 10 Kohlenstoffatomen einschließlich einem oder mehreren aus der Gruppe B, N, P, S, O oder Si ausgewählten Atomen bestehen, bei welchen das Triradikal gleiche oder unterschiedliche Substituenten enthält, die aus 1 bis 20, nicht aus Wasserstoff bestehenden Atomen gebildet sind,
B ein Hydrocarbyldiradikal ist, welches 1 bis 20 Kohlenstoffatome oder substituierte Hydrocarbyldiradikale enthält, die 0 bis 20 Kohlenstoffatome, B, N, P, S, O oder Si Atome umfassen, bei welchen die Diradikale gleiche oder unterschiedliche Substituenten aufweisen, welche aus 1 bis 20, nicht aus Wasserstoff bestehenden Atomen gebildet sind, und die Radikale an C¹ und C² zwecks Bildung von Brücken durch kovalente Bindungen angebunden sind,
C¹ und C² jeweils und unabhängig voneinander Triradikale einer Cyclopentadienylhälfte sind, die mit den beiden Radikalen von A¹ und A² und dem Radikal von M, dessen Triradikal gleiche oder unterschiedliche Substituenten aufweist, die 1 bis 20, nicht aus Wasserstoff bestehende Atome aufweisen, kovalent gebunden sind und wobei der Substituent ein Hydrocarbylradikal mit 1 bis 20 Kohlenstoffatomen oder ein Radikal sein kann, welches ein oder mehrere, aus der Gruppe B, N, P, S, O oder Si ausgewählte Atome und 1 bis 20 Kohlenstoffatome enthält, und
X jeweils und unabhängig von den anderen ein Ligand eines Halogens, eines Hydrocarbyls, das 1 bis 20 Kohlenstoffatome enthält, eines Alkyloxy-, Aryloxy-, Amid, Arylamid, Phosphid, Arylphosphid, Sulfid oder Arylsulfid ist und n eine ganze Zahl von 0 bis 4 ist, die von dem Oxidationsstatus von M abhängig ist.

2. Verfahren zur Zubereitung von Homopolymeren oder Copolymeren aus Ethylen, α-Olefin oder Cycloolefin durch Verwendung der durch die allgemeine Formel (I) dargestellten Verbindung als Katalysator und einer oder mehrerer Aluminium- oder Borverbindungen als Mitkatalysator 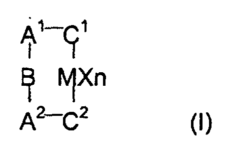 (wobei M, A¹, A², C¹, C², B, X, n den Begriffen des Anspruchs 1 entsprechen).

3. Verfahren nach Anspruch 2, wobei der Mitkatalysator durch folgende allgemeine Formel (II) dargestellt ist, welche in linearer zyklischer oder netzartiger Form vorliegt
-[Al(R⁷)-O)ₘ- (II)
wobei R⁷ ein Halogenradikal, Hydrocarbylradikal, das 1 bis 10 Kohlenstoffatome enthält oder ein Hydrocarbylradikal, das ein 1 bis 10 Kohlenstoffatome enthält, die durch Halogen substituiert sind, wobei m eine ganze Zahl ist, die größer als 2 ist und wobei ein jedes der R⁷ ein unterschiedliches oder ein gleiches Element ist.

4. Verfahren nach Anspruch 2, wobei der Mitkatalysator durch die folgende allgemeine Formel (III) dargestellt ist,
N(R⁸)₃ (III)
wobei N ein Aluminium oder ein Boratom ist, R⁸ ein Halogenradikal, ein Hydrocarbylradikal, das 1 bis 10 Kohlenstoffatome enthält, ein Hydrocarbylradikal, welches 1 bis 10 Kohlenstoffatome enthält, die durch Halogen substituiert sind und wobei ein jedes der R⁸ ein unterschiedliches oder ein gleiches Element ist.

5. Verfahren nach Anspruch 2, wobei der Mitkatalysator durch die allgemeine Formel IV dargestellt ist
Q[N(R⁹)₄] (IV)
wobei Q ein anorganisches oder ein organisches Kation ist, das die Ladung +1 trägt, wobei N Aluminium oder Bor ist, wobei R⁹ ein Halogenradikal, ein Hydrocarbylradikal, das 1 bis 10 Kohlenstoffatome enthält, ein Hydrocarbylradikal, das 1 bis 10 Kohlenstoffatome enthält, die durch Halogen substituiert sind und wobei ein jedes R⁹ das gleiche oder ein unterschiedliches Element ist.

6. Durch die allgemeine Formel (X) dargestellte Verbindungen 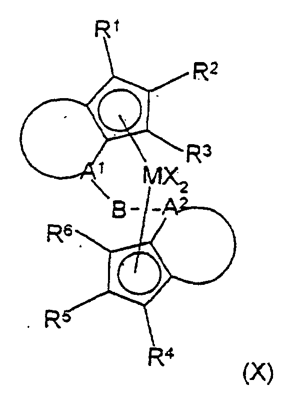 wobei
M ein Übergangsmetall ist, das aus der Gruppe 3, 4, 5 oder 6 ausgewählt ist,
A¹ und A² jeweils und unabhängig voneinander Hydrocarbyltriradikale sind, die aus mehr als zwei Kohlenstoffatomen bestehen, die kovalent mit dem Cyclopentadienylring verbunden sind oder aus 0 bis 10 Kohlenstoffatomen, einschließlich einem oder mehreren aus der Gruppe B, N, P, S, O oder Si ausgewählten Atomen bestehen, bei welchen das Triradikal gleiche oder unterschiedliche Substituenten aufweisen kann, die 1 bis 20, nicht aus Wasserstoff bestehende Atome enthalten,
B ein Hydrocarbyidiradikal ist, das 1 bis 20 Kohlenstoffatome oder substituierte Hydrocarbyldiradikale enthält, die 0 bis 20 Kohfenstoffatome sowie aus der Gruppe B, N, P, S, O oder Si ausgewählte Atome enthalten, bei welchen das Diradikal gleiche oder unterschiedliche Substituenten aulweisen kann, die jeweils 1 bis 20, nicht aus Wasserstoff bestehende Atome enthalten und wobei die Radikale zwecks Bildung einer Brücke über kovalente Bindungen an die C¹ und C² angebunden sind,
R¹ bis R⁶ jeweils gleiche oder unterschiedliche Substituenten sind, die 1 bis 20 nicht aus Wasserstoff bestehende Atome enthalten,
X jeweils und unabhängig von anderen ein Ligand des Halogens oder des Hydrocarbyls ist, welcher 1 bis 20 Kohlenstoffatome, Alkyloxy-, Aryloxy-, Amid, Arylamid, Phosphid, Arylphosphid, Sulfid oder Arylsulfid enthält.

7. Durch die allgemeine Formel Xl dargestellte Verbindungen 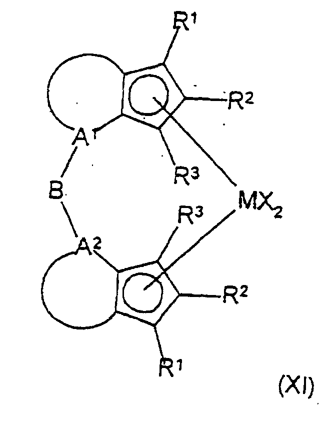 wobei M, A1, A2, B, R¹ - R⁶ und X die gleiche Bedeutung wie Anspruch 6 aufweisen.

## Revendications

1. Composés représentés par la formule générale (I) : 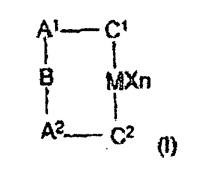 où
M est un métal de transition choisi dans le groupe 3 ou 4 ou 5 ou 6.
A¹ et A² sont respectivement et indépendamment un triradical hydrocarbyle constitué de plus de deux atomes de carbone qui sont liés au cycle cyclopentadiényle de manière covalente, ou de 0 à 10 atomes de carbone comprenant un ou plusieurs parmi les atomes B, N, P, S, O ou Si, dans lequel le triradical peut avoir des substituants identiques ou différents contenant de 1 à 20 atomes non hydrogène.
B est un diradical hydrocarbyle contenant de 1 à 20 atomes de carbone, ou un diradical hydrocarbyle substitué contenant de 0 à 20 atomes de carbone, les atomes B, N, P, S, O, ou Si, dans lequel le diradical peut avoir des substituants identiques ou différents contenant de 1 à 20 atomes non hydrogène et les radicaux joints à C¹ et C² pour former un pont par des liaisons covalentes.
C¹ et C² sont respectivement et indépendamment un triradical de fraction cyclopentadiényle qui est lié de manière covalente à deux sites radicaux de A¹ et A² et à un site radical de M, dans lequel le triradical peut avoir des substituants identiques ou différents contenant de 1 à 20 atomes non hydrogène, et le substituant peut être un radical hydrocarbyle avec 1 à 20 atomes ou un radical contenant un ou plusieurs atomes de B, N, P, S, O ou Si et de 1 à 20 atomes de carbone.
X est respectivement et indépendamment un ligand d'halogène, un hydrocarbyle contenant de 1 à 20 atomes de carbone, un alcoxy, un aryloxy, un amide, un arylamide, un phosphure, un arylphosphure, un sulfure ou un arylsulfure.
n est un nombre entier de 0 à 4 qui dépend de l'état d'oxydation de M.

2. Procédé pour la préparation d'homopolymères ou de copolymères d'éthylène, d'α-oléfine, ou de cyclooléfine, en utilisant les composés représentés par la formule générale (I) comme catalyseur et un ou plusieurs des composés de l'aluminium ou du bore comme co-catalyseur.
(où M, A¹, A², C¹, C², B, X, n sont les mêmes que 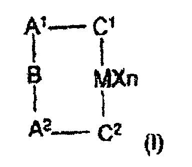 ceux décrits dans la revendication 1.

3. Procédé selon la revendication 2, dans lequel le co-catalyseur est représenté par la formule générale (II) qui peut exister sous forme linéaire ou cyclique ou nette.
-[Al(R⁷)-Oₘ- (III)
où R⁷ est un radical halogène, un radical hydrocarbyle contenant de 1 à 10 atomes de carbone, ou un radical hydrocarbyle contenant de 1 à 10 atomes de carbone substitué avec un halogène, m est un nombre entier supérieur à 2, chacun de R⁷ est identique ou différent.

4. Procédé selon la revendication 2, dans lequel le co-catalyseur est représenté par la formule générale (III).
N(R⁸)₃ (III)
où N est un atome d'aluminium ou de bore, R⁸ est un radical halogène, un radical hydrocarbyle contenant de 1 à 10 atomes de carbone, un radical hydrocarbyle contenant de 1 à 10 atomes de carbone substitué avec un halogène, et chacun de R⁸ est identique ou différent.

5. Procédé selon la revendication 2, dans lequel le co-catalyseur est représenté par la formule générale (IV).
Q[N(R⁹)₄] (IV)
où Q est un cation inorganique ou organique chargé avec +1, N est l'aluminium ou le bore, R⁹ est un radical halogène, un radical hyrocarbyle contenant de 1 à 10 atomes de carbone, un radical hydrocarbyle contenant de 1 à 10 atomes de carbones substitué avec un halogène, chaque R⁹ est identique ou différent.

6. Composés représentés par la formule générale (X) : 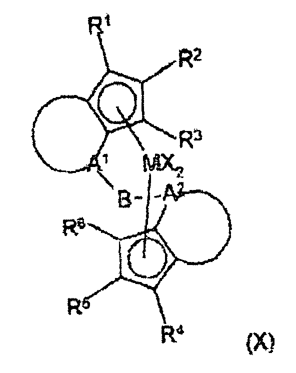 où
M est un métal de transition choisi dans le groupe 3 ou 4 ou 5 ou 6.
A¹ et A² sont respectivement et indépendamment un triradical hydrocarbyle constitué de plus de deux atomes de carbone qui sont liés au cycle cyclopentadiényle de manière covalente, ou de 0 à 10 atomes de carbone comprenant un ou plusieurs parmi les atomes B, N, P, S, O ou Si, dans lesquels le triradical peut avoir des substituants identiques ou différents contenant de 1 à 20 atomes non hydrogène.
B est un diradical hydrocarbyle contenant de 1 à 20 atomes de carbone, ou un diradical hydrocarbyle substitué contenant de 0 à 20 atomes de carbone, les atomes B, N, P, S, O, ou Si, dans lequel le diradical peut avoir des substituants identiques ou différents contenant de 1 à 20 atomes non hydrogène et les radicaux joints à C¹ et C² pour former un pont par des liaisons covalentes.
R¹ à R⁶ sont respectivement un substituant identique ou différent contenant de 1 à 20 atomes de non hydrogène.
X est respectivement et indépendamment un ligand d'halogène, un hydrocarbyle contenant de 1 à 20 atomes de carbone, un alcoxy, un aryloxy, un amide, un arylamide, un phosphure, un arylphosphure, un sulfure, ou un arylsulfure.

7. Composés représentés par la formule générale (XI) : 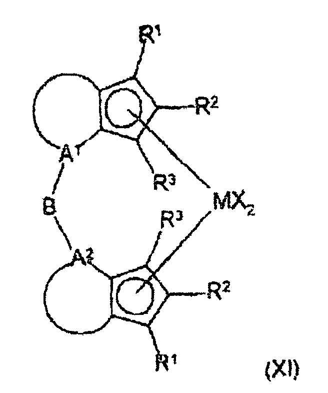 où M, A¹, A², B, R¹ à R⁶ et X sont les mêmes que ceux décrits dans la revendication 6.
